# DEMANDE DE BREVET EUROPEEN

(11) **EP 2 759 750 A1**
(43) Date de publication de la demande: **30.07.2014**
(21) Numéro de dépôt: 13199081.4
(22) Date de dépôt: 20.12.2013
(51) Int. Cl.: F16K 37/00, F15B 20/00, F16K 27/02

(54) **Dispositif de détection de l'état d'un montage d'une bobine sur une électrovanne**

(30) Priorité: 24.01.2013 FR 1350628
(71) Demandeur: Era Sib (SAS), 95100 Argenteuil (FR)
(72) Inventeur: Da Silva, Almiro, 78980 LONGNES (FR)
(74) Mandataire: Novagraaf Technologies

(57) **Abrégé**

L'invention concerne un dispositif de détection d'un état d'un montage d'une tête d'électrovanne (2, 2') sur un support (30) d'un corps (3, 3') d'une électrovanne (1, 1'), ladite tête (2, 2') comprenant une bobine (20).

Selon l'invention, le dispositif comprend au moins un élément apte à être ménagé sur la tête (2, 2') et apte à coopérer avec le corps de l'électrovanne (3, 3').

## Description

### 1.Domaine de l'invention

La présente invention concerne le domaine des électrovannes.

Plus particulièrement, l'invention concerne un dispositif de détection de l'état de montage d'une tête d'électrovanne, comprenant une bobine, sur un corps d'électrovanne.

### 2.Solutions de l'art antérieur

Il est connu, par exemple pour la gestion du remplissage d'une cuve de lave-linge ou au sein d'un système de climatisation, de mettre en oeuvre une ou plusieurs électrovannes.

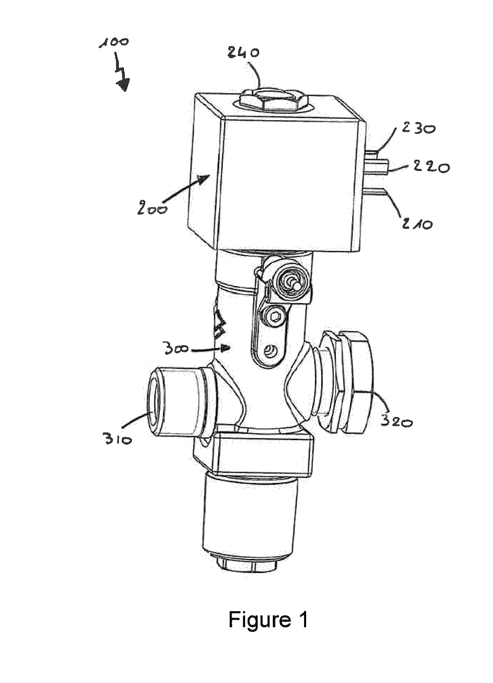

Comme illustré en **figure 1****,** une électrovanne 100 est, de manière classique, composée principalement de deux parties, à savoir un corps d'électrovanne 300 et une tête 200, autrement appelée tête magnétique. Le corps d'électrovanne 300 comprend entre autres des orifices de raccordement 310, 320 permettant de faire circuler un fluide, ainsi que des moyens de contrôle de l'écoulement du fluide au niveau de ces deux orifices 310, 320. Ce corps d'électrovanne 300 comprend en outre un tube de guidage, ménagé à partir d'une face externe du corps, et permettant de fixer la tête magnétique 200 au corps de l'électrovanne. Cette tête magnétique 200 comprend entre autres un logement renfermant une bobine composée de fils de cuivre enroulés autour d'un noyau métallique, le noyau formant le circuit fer et les fils le circuit cuivre de la bobine. La tête magnétique 200 comporte en outre trois bornes, à savoir une borne positive 220, une borne négative 230 et une borne de masse 210, ces bornes permettant d'alimenter la tête magnétique en électricité.

La tête 200 est maintenue fixe sur un support (non représenté) du corps 300 de la vanne par des moyens de fixation tel qu'un écrou 240 coopérant avec une partie filetée du support, qui est ici un tube de guidage, de sorte que la tête 200 ne soit plus mobile en translation par rapport au corps de la vanne.

Pour le bon fonctionnement de l'électrovanne, la bobine, et par conséquent la tête de la vanne doit remplir plusieurs critères, à savoir être présente, être correctement fixée sur le support du corps de l'électrovanne, et être en « état de marche », c'est-à-dire non défaillante.

Cependant, à l'heure actuelle, il n'existe que des dispositifs permettant de vérifier l'intégrité de la bobine. Ainsi, de tels dispositifs ne permettent pas de déterminer de manière satisfaisante si la bobine est en état de fonctionner ou non ce qui n'est pas satisfaisant.

En effet une tête qui serait, par exemple, mal fixée sur le support du corps de la vanne ne serait pas pleinement efficace ce qui n'est pas satisfaisant.

Par ailleurs, une tête qui serait montée en sens inverse sur le corps de la vanne, c'est-à-dire une bobine qui fournirait un champ magnétique opposé au champ magnétique prévu pour le bon fonctionnement de l'électrovanne, ne permettrait pas à l'électrovanne de remplir sa fonction ce qui n'est pas non plus satisfaisant.

En outre, une bobine qui ne serait pas présente ne permettrait évidemment pas à l'électrovanne de fonctionner de manière convenable.

### 3.Objectifs de l'invention

L'invention a notamment pour objectif de résoudre les inconvénients de l'art antérieur.

Plus particulièrement un objectif de l'invention est de fournir un dispositif permettant de connaître l'état du montage d'une tête d'électrovanne sur un support d'un corps d'une électrovanne de manière à s'assurer du bon montage de la bobine et ainsi du « bon fonctionnement » de cette électrovanne.

Un autre objectif est de fournir un tel dispositif qui soit adaptable à la plupart, voire la totalité, des types d'électrovannes existants à l'heure actuelle.

Encore un autre objectif de l'invention est de fournir un dispositif qui soit peu coûteux et simple à mettre en oeuvre.

### 4. Résumé de l'invention

Ces objectifs, ainsi que d'autres qui apparaîtront par la suite, sont atteints à l'aide d'un dispositif de détection d'un état d'un montage d'une tête d'électrovanne sur un support d'un corps d'une électrovanne, la tête comprenant une bobine. Selon l'invention, le dispositif comprend au moins un élément ménagé sur la tête et coopérant avec le corps de l'électrovanne.

Ainsi, l'invention propose une approche nouvelle et inventive permettant de déterminer l'état de montage d'une tête d'électrovanne sur un support de corps d'électrovanne, et par conséquent de l'état de montage de la bobine logée dans la tête. Cela permet ainsi d'avoir une information sur l'état de montage de la tête (et donc de la bobine), et par conséquent sur la capacité de l'électrovanne à pouvoir remplir sa fonction.

Dans un mode de réalisation particulier de l'invention, l'élément coopère électriquement et/ou magnétiquement avec le corps de la vanne.

Ainsi, cela permet de détecter, par l'intermédiaire de données électriques et/ou magnétiques, un état de montage de la tête sur le support. En effet, l'élément coopérant électriquement et/ou magnétiquement avec le corps de la vanne, un champ électrique et ou magnétique est détectable et possède une valeur caractéristique en fonction de son état de montage.

Dans un autre mode de réalisation de l'invention, l'élément est constitué d'au moins une première borne électrique de masse ménagée sur la tête de la vanne, et reliée à une deuxième borne électrique de masse ménagée sur le corps de la vanne, les première et deuxième bornes formant un circuit de masse.

Cela permet de former un circuit électrique entre la tête de la vanne et le corps de la vanne et ainsi de pouvoir détecter l'état du montage de la tête de la vanne sur le support par le biais de ce circuit électrique.

Dans ce cas, le dispositif peut comprendre des moyens de contrôle d'une continuité du circuit de masse tel qu'un ohmmètre ou un conductimètre.

Cela permet de détecter l'état du montage de la tête d'électrovanne sur le support par le contrôle de la continuité du circuit de masse entre la tête et la vanne. De ce fait, il est possible de détecter un défaut de montage par une ouverture du circuit de masse détectée par les moyens de contrôle.

Dans une variante, les première et deuxième bornes de masse sont reliées par l'intermédiaire d'au moins un connecteur embrochable comportant des bornes à visser ou des cosses à sertir.

Un tel connecteur permet de sécuriser la continuité du circuit en limitant le risque de rupture entre les deux bornes du circuit.

Dans un autre mode de réalisation, l'élément comprend au moins un aimant logé dans la tête et coopérant avec au moins un capteur magnétique fixé sur le corps de la vanne.

Ainsi, cela permet de mettre en oeuvre un élément générant un champ magnétique sur la tête de la bobine, et coopérant avec un capteur, mis en oeuvre sur le corps de la vanne, apte à mesurer une valeur caractéristique du champ magnétique généré. Il est donc possible de détecter un défaut de montage de la tête de la vanne sur le support en captant ce champ magnétique.

Dans ce cas, l'aimant peut être logé dans la tête, à proximité d'une zone de contact entre la tête et le support du corps de la vanne.

De ce fait, il est possible de détecter précisément le champ magnétique généré par l'aimant en le disposant à proximité du capteur.

Dans un mode de réalisation particulier, l'aimant présente un profil annulaire.

Ainsi, cela permet d'homogénéiser le champ magnétique à capter par le capteur mis en oeuvre sur le corps de la vanne.

L'invention concerne également une électrovanne comprenant un dispositif selon l'un des modes de réalisations de l'invention.

### 5. Liste des figures

D'autres caractéristiques et avantages de l'invention apparaitront plus clairement à la lecture de la description suivante de deux modes de réalisation, donnés à titre de simples exemples illustratifs et non limitatifs, et des dessins annexés, parmi lesquels :
- la figure 1, déjà présentée précédemment, est une vue en perspective d'une électrovanne de l'art antérieur ;
- la figure 2 est une vue latérale en coupe d'une électrovanne comprenant un dispositif de détection selon un premier mode de réalisation de l'invention ;
- la figure 3 est une vue latérale en coupe d'une électrovanne comprenant un dispositif de détection selon un deuxième mode de réalisation de l'invention ; et
- la figure 4 est une vue latérale en coupe de la tête magnétique de la figure 3.

### 6. Description détaillée

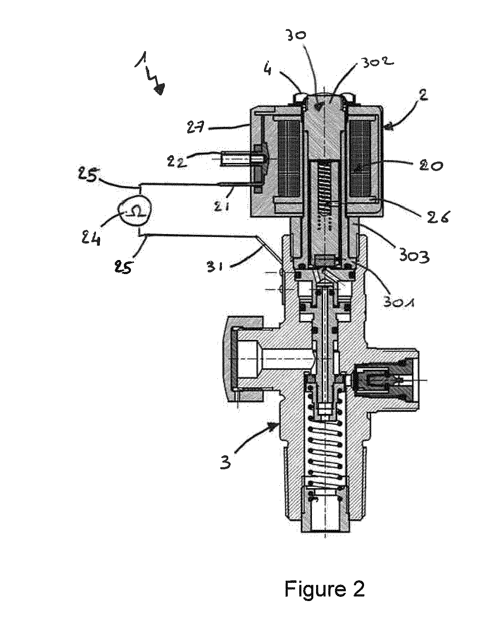

On présente maintenant, en relation avec la **figure** 2, un premier mode de réalisation de l'invention. Comme illustré sur cette figure, l'électrovanne 1 comprend une tête de vanne 2 et un corps de vanne 3.

La tête de vanne 2 comprend une bobine 20 composée de fils de cuivre 28 enroulés autour d'un socle creux 26 en plastique, glissé dans un étrier métallique 29, l'étrier 29 formant le circuit fer et les fils 28 le circuit cuivre de la bobine 20. La tête magnétique 2 comprend en outre un boîtier 27, qui est dans cet exemple sensiblement parallélépipédique, permettant de loger la bobine 20 à l'intérieur de la tête magnétique 2. Cette bobine 20 est reliée à trois bornes électriques, à savoir une borne positive 22, une borne négative (non visible sur cette figure), et une borne de masse 21. Ces trois bornes sont montées à proximité d'une des faces du boîtier 27 de sorte qu'elles soient ménagées en partie à l'extérieur de ce boîtier 27. On peut bien évidemment prévoir un boîtier présentant un profil différent d'un profil parallélépipédique. On peut notamment mettre en oeuvre un boîtier cylindrique, cubique, ou sphérique.

La tête 2 est montée sur le corps 3 de la vanne par l'intermédiaire d'un support 30, appartenant au corps 3. Ce support 3 comprend un tube de guidage 301 métallique venant coopérer avec le socle 26, de manière à guider le montage de la tête 2. Le support 30 comprend en outre une butée 303 métallique sur laquelle la tête 2 vient en appui lorsqu'elle est en configuration d'utilisation, et une culasse 302 coopérant avec un ou plusieurs moyens de verrouillage 4 de la position de la tête magnétique 2, ce moyen étant ici un écrou de serrage venant serrer la tête magnétique 2 contre la butée 303 du support de sorte qu'elle soit maintenue en place.

De manière à détecter et à vérifier l'état de montage de la tête 2, et indirectement de la bobine 20, on dispose sur l'électrovanne 1 un dispositif de détection de l'état du montage de la tête sur le support du corps de la vanne. Ce dispositif comprend un élément ménagé sur la tête magnétique 2, à savoir la borne de masse 21, qui coopère électriquement avec le corps 3 de la vanne par l'intermédiaire d'une borne 31 disposée sur le contour extérieur du corps 3. Dans cet exemple, les deux bornes de masse 21, 31 sont reliées entre elles par l'intermédiaire d'un connecteur 25 embrochable avec des bornes à visser ou des cosses à sertir, de manière à former un circuit de masse continu entre la bobine 20 (et par conséquent la tête 2) et le corps 3 de l'électrovanne 1. Ainsi, le circuit de masse est fermé entre la bobine et le corps de la vanne uniquement si la bobine est montée sur le support de la vanne, si l'écrou de serrage 4 est présent de manière à assurer le contact permanent entre la tête 2 et le corps 3, et si les deux bornes de masse 21, 31 sont reliées entre elles. Le dispositif de détection de l'état de montage de la tête 2 d'électrovanne sur le support 30 permet donc de détecter plusieurs défauts de montage de la tête 2 sur le support 30, parmi lesquels :
- un défaut de présence de la bobine 20 et/ou de la tête 2 qui provoque une coupure du circuit de masse entre la butée 303 et le corps 3 de la vanne ;
- un défaut de connexion des bornes de masse 21, 31 qui provoque une coupure du circuit de masse entre le connecteur 25 et la bobine 20 ; ou
- un défaut de présence de l'écrou de serrage 4 qui provoque une ouverture du circuit entre la bobine 20 et le corps 3 de la vanne.

De manière à détecter au moins l'un de ces défaut, correspondant à une « rupture de la continuité » du circuit de masse, correspondant donc à un des défauts précités au niveau de l'électrovanne, le dispositif comprend en outre, dans ce mode de réalisation, des moyens de contrôle 24 de la continuité du circuit tel qu'un ohmmètre ou un conductimètre.

Selon plusieurs variantes de l'invention, on peut imaginer que les défauts de montage précités sont détectés, par le dispositif de détection, de manière différente ou non. En d'autres termes, on peut prévoir des moyens de contrôle qui signalent une rupture de la continuité du circuit de masse, permettant simplement de détecter un défaut de montage sans plus de précision sur la nature du défaut. On peut également prévoir des moyens de contrôle qui signalent une rupture de la continuité du circuit de masse ainsi qu'une indication de la partie du circuit de masse au niveau de laquelle la rupture est effective, permettant de déduire la nature du défaut de montage, à savoir si c'est un défaut de présence, de connexion, ou de serrage.

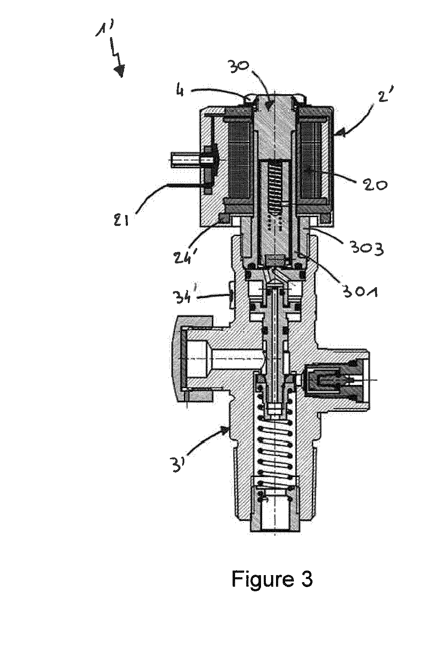

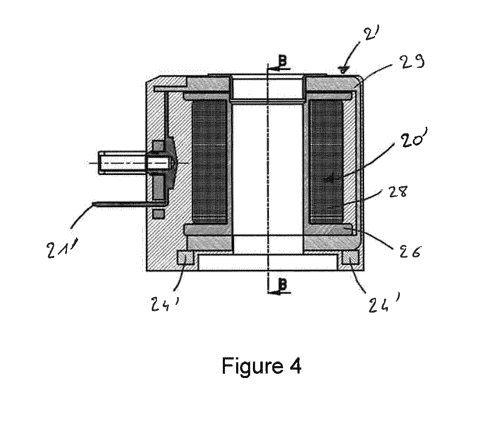

On présente maintenant, en relation avec les figures 3 et 4, un deuxième mode de réalisation de l'invention.

Dans ce mode de réalisation, le dispositif de détection mis en oeuvre au sein de l'électrovanne 1' comprend également un élément ménagé sur la tête 2' et coopérant magnétiquement avec le corps 3' de l'électrovanne, sous la forme d'un aimant 24' logé dans la tête 2' et coopérant avec un capteur magnétique 34' fixé sur le contour extérieur du corps 3' de la vanne. Selon les variantes de l'invention, on peut prévoir que l'aimant est moulé ou surmoulé dans le boîtier renfermant la bobine. On peut en outre prévoir une bobine moulée ou non dans le boîtier, et indépendamment un aimant moulé ou non dans le boîtier.

Dans cet exemple, l'aimant 24' présente un profil annulaire et est logé dans la tête 2', à proximité d'une zone de contact entre la tête 2' et le support 30, c'est-à-dire à proximité de la butée annulaire 303 similaire à la butée mis en oeuvre dans le premier mode de réalisation illustré en figure 2. Comme illustré sur la figure 3, l'aimant 24' est logé de telle sorte qu'il soit coaxial au tube de guidage 301 du support 30.

Le capteur magnétique 34' détecte le champ magnétique de l'aimant 24' ce qui permet de détecter un état de montage de l'aimant 24', et par conséquent de la tête 2' et de la bobine 20. En effet, le capteur peut détecter un champ magnétique conforme aux attentes, inverse au champ magnétique attendu, de valeur différente à la valeur attendue, ou même une absence de champ magnétique. Ainsi, ce dispositif de détection va, dans ce deuxième mode de réalisation, pouvoir détecter plusieurs défauts de montage de la tête 2' de la vanne sur le support 30 du corps 3', parmi lesquels :
- une absence de champ magnétique, qui peut signifier la non-présence de la tête magnétique 2' ou de l'aimant 24' dans la tête 2' ;
- une valeur différente, voire variable, de champ magnétique qui peut être due à un mauvais serrage de la tête magnétique 2' sur le tube 301 de guidage du support, ou à une absence de l'écrou de serrage 4 par exemple ; ou
- un champ magnétique au champ magnétique attendu qui peut être un signe d'un montage de la tête 2' sur le support 30 en sens inverse.

De même que pour le premier mode de réalisation présenté ci-avant, on peut imaginer plusieurs variantes de l'invention, dans lesquels les défauts de montage précités sont détectés, par le dispositif de détection, de manière différente ou non.

Ainsi, on s'assure d'une possibilité de « bon fonctionnement » ou non de l'électrovanne, sur le plan du montage de la bobine sur le support, par la détection de l'état du montage de la tête sur le support, qui est une condition du bon fonctionnement de l'électrovanne.

Dans des variantes de l'invention, on peut prévoir des modes de réalisation dans lesquels l'aimant présenterait un profil différent et ne serait pas logé au même endroit que l'aimant du mode de réalisation présenté. Par exemple, on peut imaginer des modes de réalisation dans lesquels l'aimant serait simplement un aimant parallélépipédique placé dans un emplacement à l'intérieur de la tête magnétique et détecté de la même manière par le capteur magnétique du corps de la vanne. On peut également imaginer plusieurs éléments disposés dans ou sur la tête de la vanne et coopérant magnétiquement avec un ou plusieurs capteurs magnétiques disposés sur ou dans le corps de la vanne.

On peut également prévoir des modes de réalisation dans lesquels le dispositif de détection comprend un ou plusieurs éléments ménagés sur la tête et coopérant à la fois électriquement et magnétiquement avec le corps de la vanne, ou même une combinaison d'éléments coopérant électriquement et d'éléments coopérant magnétiquement.

## Revendications

1. Dispositif de détection d'un état d'un montage d'une tête d'électrovanne (2, 2') sur un support (30) d'un corps (3, 3') d'une électrovanne (1, 1'), ladite tête (2, 2') comprenant une bobine (20), **caractérisé en ce qu**'il comprend au moins un élément ménagé sur la tête (2, 2') et coopérant avec le corps de l'électrovanne (3, 3').

2. Dispositif selon la revendication 1, **caractérisé en ce que** l'élément coopère électriquement et/ou magnétiquement avec le corps (3, 3') de l'électrovanne (1, 1').

3. Dispositif selon les revendications 1 ou 2, **caractérisé en ce que** l'élément est constitué d'au moins une première borne électrique de masse (21) ménagée sur la tête (2) de la vanne, et reliée à une deuxième borne électrique de masse (31) ménagée sur le corps (3) de la vanne, lesdites première (21) et deuxième (21) bornes formant un circuit de masse.

4. Dispositif selon la revendication précédente, **caractérisé en ce qu**'il comprend des moyens de contrôle (24) d'une continuité du circuit de masse.

5. Dispositif selon l'une des revendications 3 ou 4, **caractérisé en ce que** lesdites première (21) et deuxième (31) bornes de masse sont reliées entre elles par l'intermédiaire d'au moins un connecteur (25).

6. Dispositif selon l'une des revendications 1 ou 2, **caractérisé en ce que** l'élément comprend au moins un aimant (24') logé dans la tête (2) et coopérant avec au moins un capteur magnétique (34') fixé sur le corps de la vanne (3').

7. Dispositif selon la revendication précédente, **caractérisé en ce que** l'aimant (24') est logé dans la tête (2'), à proximité d'une zone de contact entre la tête (2') et le support (30) du corps (3') de la vanne (1').

8. Dispositif selon l'une des revendications 6 ou 7, **caractérisé en ce que** l'aimant (24') présente un profil annulaire.

9. Electrovanne (1, 1') comprenant une tête de vanne (2, 2') apte à être montée sur un support (30) d'un corps (3, 3') d'électrovanne (1, 1'), ladite tête de vanne (2, 2') comprenant une bobine (20), **caractérisé en ce qu'**elle comprend un dispositif de détection de l'état de du montage de la tête de vanne (2, 2') sur le support (30) selon l'une quelconque des revendications précédentes.
